# EUROPÄISCHE PATENTSCHRIFT

(11) **EP 2 269 488 B1**
(45) Veröffentlichungstag und Bekanntmachung des Hinweises auf die Patenterteilung: **23.07.2014**
(21) Anmeldenummer: 10164012.6
(22) Anmeldetag: 27.05.2010
(51) Int. Cl.: A47J 31/44

(54) **Kaffeemaschine**
Coffee machine
Machine à café

(30) Priorität: 30.06.2009 DE 202009004966 U
(43) Veröffentlichungstag der Anmeldung: 05.01.2011
(73) Patentinhaber: Melitta Europa GmbH & Co. KG, 32427 Minden (DE)
(72) Erfinder: SACHTLEBEN, Andreas, 32427, Minden (DE)
(74) Vertreter: Dantz, Jan Henning

(56) Entgegenhaltungen:
- EP-A1- 0 928 590
- DE-B3-102008 014 838
- DE-U1- 29 701 818

## Beschreibung

Die vorliegende Erfindung betrifft eine Kaffeemaschine, insbesondere Haushalts-Kaffeemaschine, mit einem Frischwasserbehälter, einem Filterbehälter und mit einem Gehäuse mit einem Gehäusesockel, welcher mehrere Standfüße zur Abstützung der Kaffeemaschine auf einem Tisch, einer Arbeitsplatte oder dergleichen aufweist.

Kaffeemaschinen der gattungsgemäßen Art müssen für die Herstellung einer bestimmten Kaffeemenge mit Frischwasser einerseits und mit Kaffeemehl andererseits befüllt werden, wobei das Frischwasser in den Frischwasserbehälter und das Kaffeemehl in den mit einem Filter versehenen Filterbehälter eingefüllt wird.

Um eine bestimmte Trinkqualität des Kaffees zu erreichen, ist eine Abstimmung der jeweils verwendeten Mengen von Frischwasser einerseits und Kaffeemehl andererseits erforderlich.

Um dem Benutzer einer entsprechenden Kaffeemaschine eine derartige, abgestimmte Dosierung zu ermöglichen sind bislang folgende Maßnahmen bekannt:

Bei Kaffeemaschinen mit Frischwasserbehältern aus einem transparenten Material ist der Frischwasserbehälter häufig mit Dosierstrichen ausgestattet, den dem Benutzer das Ablesen der eingefüllten Frischwassermenge ermöglichen. Bei Kaffeemaschinen, die mit einem Frischwasserbehälter aus nicht transparentem Material ausgestattet sind, werden häufig mit dem Frischwasserbehälter korrespondierende transparente Röhren mit einer entsprechenden Skalierung angebracht.

Um dem Benutzer die Dosierung der jeweils erforderlichen Menge an Kaffeemehl zu ermöglichen, werden sogenannte Dosierlöffel bereitgestellt, die eine bekannte Menge Kaffee aufnehmen können. Der Benutzer kann dann durch einmaliges oder mehrmaliges Benutzen des Dosierlöffels die auf eine bestimmte, gewünschte Tassenzahl abgestimmte Kaffeemehl-Menge in den Filterbehälter einfüllen.

Es sind auch Einrichtungen bekannt, bei denen die Befüllung mit Kaffeemehl von Anzeigevorrichtungen übernommen wird, die an elastischen Elementen befestigt sind.

In allen Fällen ist eine genaue Ermittlung und Anzeige der erforderlichen Informationen bei den bislang bekannten Kaffeemaschinen nicht immer gewährleistet. Ein komplexer Aufbau mit entsprechend schwieriger Montage ist notwendig, um die Wägevorrichtung zu realisieren.

Die EP 928 590 offenbart eine Kaffeemaschine mit einer Dosiersignalanordnung, bei der über einen ersten Kraftsensor der Wasserstand in einem Wasserbehälter und einen zweiten Sensor die Kaffeemehlmenge in einem Filtergefäß erfassbar ist. Über eine Vergleichseinrichtung kann eine Anzeige zum Verhältnis der Wassermenge und des Kaffeemehls ausgegeben werden.

Die DE 297 01818 U1 offenbart eine digitale Kaffeefüllstandsanzeige, die über einen Feingewichtssensor an der Aufhängung des Filterbehälters steuerbar ist.

Ziel der vorliegenden Erfindung ist es, die oben aufgeführten Nachteile zu vermeiden und eine Kaffeemaschine der gattungsgemäßen Art zu schaffen, die dem Benutzer eine genaue und leicht durchführbare Dosierung der jeweiligen Mengen von Kaffee und Wasser ermöglicht. Des weiteren soll der Fertigungs- und Montageprozess wesentlich erleichtert werden.

Diese Aufgabe wird erfindungsgemäß durch eine Kaffeemaschine mit den Merkmalen des Anspruches 1 gelöst.

Über die Wägevorrichtung können die Frischwasser- und Kaffeemehl-Mengen getrennt voneinander durch eine Wägung ermittelt werden, wobei über den Dosierrechner eine Zuordnung jeweils zu einem Brühgetränk bestimmter Trinkstärke führendes Verhältnis bestimmt und in der Anzeigeeinrichtung für den Benutzer deutlich sichtbar zur Anzeige gebracht wird.

Fehldosierungen sind somit praktisch nicht mehr möglich und erleichtern einem Benutzer die Herstellung von einem frisch aufgebrühten Kaffee in der jeweils für ihn gewünschten Trinkstärke erheblich.

Nach der Erfindung ist vorgesehen, dass die Wägevorrichtung mindestens einen in einem Standfuß angeordneten Biegebalken mit einem Dehnungsmessstreifen aufweist.

Mit einer derart gestalteten Wägevorrichtung können insbesondere auch relativ geringe Mengen von Kaffeemehl wägetechnisch erfasst werden, so dass auch bei der Herstellung von geringen Tassenzahlen von Kaffee das jeweils zweckmäßige Dosierverhältnis zwischen Frischwasser einerseits und Kaffeemehl andererseits sichergestellt werden kann.

Dabei ist bevorzugt, dass die Wägevorrichtung in jedem Standfuß einen Biegebalken mit einem Dehnungsmessstreifen aufweist. Hierdurch können ungenaue oder Fehlmessungen weitestgehend ausgeschlossen werden.

Bevorzugt ist eine Ausführungsform der Erfindung, bei der der Dosierrechner mit einem Umrechnungsprogramm ausgestattet ist, mittels dessen nach dem Einfüllen und Abwiegen einer Menge von Frischwasser oder Kaffeemehl die für die Erzeugung eines Brühkaffees bestimmter Trinkstärke erforderliche Menge an Kaffeemehl oder Frischwasser errechnet und das Erreichen dieser errechneten Menge optisch und/oder akustisch angezeigt wird.

Der Benutzer kann somit zunächst eine bestimmte Menge an Frischwasser oder an Kaffeemehl einfüllen, wobei in jedem Falle, je nach Füllstand, in der Anzeigeeinrichtung angezeigt wird, welche Kaffeemenge, bevorzugt in Tassenzahlen, mit der jeweils zuerst eingefüllten Menge erzeugt werden kann. Anschließend wird die Wägevorrichtung tariert, d.h., wieder auf Null gestellt, so dass nun die zweite Komponente - Kaffeemehl oder Frischwasser - solange eingefüllt werden kann, bis die vorher errechnete Menge dieser zweiten Komponente ermittelt ist. Da dann das Dosierverhältnis dem Programm des Dosierrechners entspricht, wird bei Beachtung der entsprechenden Anzeige durch den Benutzer gewährleistet, dass er einen Brühkaffee in der von ihm gewünschten Trinkstärke erhält.

Weitere Merkmale der Erfindung sind Gegenstand weiterer Unteransprüche.

Ein Ausführungsbeispiel der Erfindung ist in den beigefügten Zeichnungen dargestellt und wird im Folgenden näher beschrieben.

Es zeigen:
- Figur 1: eine schematisch dargestellte Vorderansicht einer erfindungsgemä- ßen Kaffeemaschine
- Figur 2: eine vollbildliche Darstellung der Vorderansicht der Kaffeemaschine gemäß Figur 1

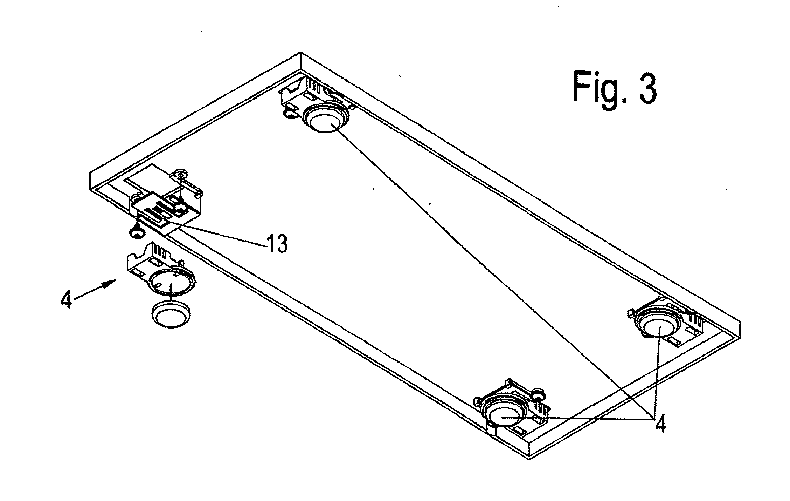

- Figur 3: eine perspektivische Darstellung einer im Sockelbereich der Kaffee- maschine nach den Figuren 1 und 2 angeordneten Wägeplatte
- Figur 4: einen Teilschnitt durch den Sockelbereich einer erfindungsgemäßen Kaffeemaschine im Bereich eines mit einer Wägevorrichtung ausge- statteten Standfußes.

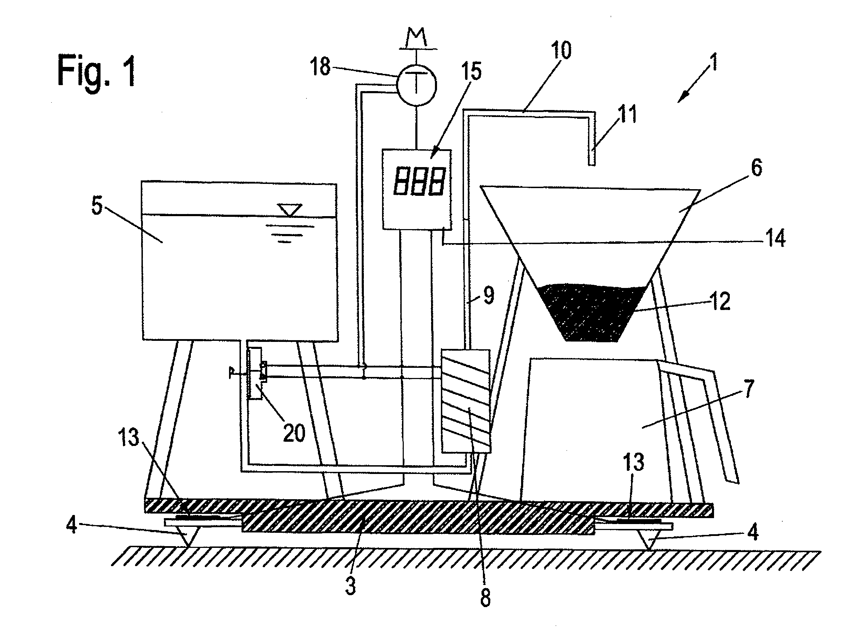

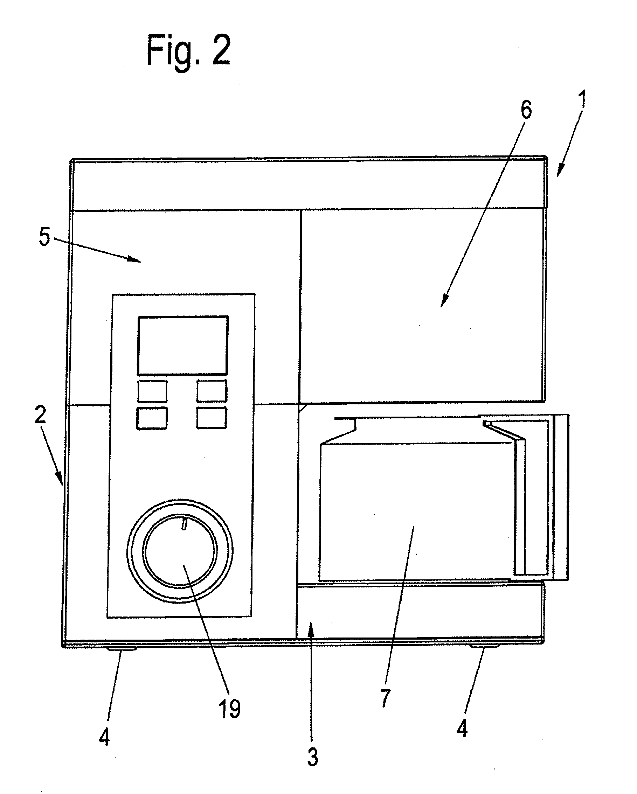

Die in den Figuren 1 und 2 mit dem Bezugszeichen 1 bezeichnete Kaffeemaschine weist ein Gehäuse 2 mit einem Gehäusesockel 3 auf, wobei im Bereich des Gehäusesockels mehrere Standfüße 4 zur Abstützung der Kaffeemaschine 1 auf einem Tisch, einer Arbeitsplatte oder dergleichen vorgesehen sind.

In an sich bekannter Weise weist die Kaffeemaschine 1 darüber hinaus einen Frischwasserbehälter 5 und einen Filterbehälter 6 auf, wobei sich der Filterbehälter 6 oberhalb eines Aufnahmebehälters 7 zur Aufnahme eines mittels der Kaffeemaschine 1 erzeugten Brühkaffees befindet. Unterhalb des Auslaufbereiches des Frischwasserbehälters 5 ist, was Figur 1 sehr deutlich zeigt, ein Durchlauferhitzer 8 vorgesehen. Weiterhin ist eine mit dem Durchlauferhitzer 8 in Verbindung stehende Steigleitung 9 vorgesehen, die oberseitig in ein Überlaufrohr 10 mit einem Auslauf 11 einmündet. Der Auslauf 11 befindet sich oberhalb des Filterbehälters 6.

In den Filterbehälter 6 wird in bekannter Weise ein nicht dargestellter Filter eingebracht, anschließend wird in den Filterbehälter 6 eine bestimmte Menge an Kaffeemehl 12 eingefüllt.

Je nach Form des Filtergefäßes 6 können tütenartige Verwendung finden, so wie beim Ausführungsbeispiel nach Figur 1 dargestellt, es besteht aber auch die Möglichkeit, ein Filtergefäß 6 mit überwiegend zylindrischer Form zu wählen und auf den Boden des Filtergefäßes 6 einen blattförmigen Filter einzulegen.

Dies ist für die vorliegende Erfindung allerdings von untergeordneter Bedeutung und soll nur der Vollständigkeit halber erwähnt sein.

Um eine bestimmte Menge an Brühkaffee in einer bestimmten Trinkstärke zu erzeugen, bedarf es einer möglichst genauen Dosierung von Frischwasser einerseits und Kaffeemehl 12 andererseits.

Um eine derartige Dosierung zu erleichtern, ist die Kaffeemaschine 1 erfindungsgemäß mit einer Wägevorrichtung 13, einem Dosierrechner 14 und einer Anzeigeeinrichtung 15 versehen. Das Vorhandensein dieser Komponenten ermöglicht auch, diese Einheit beispielsweise als Uhr zu betreiben. Damit ist eine Timerfunktion umsetzbar, die die Kaffeemaschine zu einer voreinstellbaren Zeit automatisch starten kann.

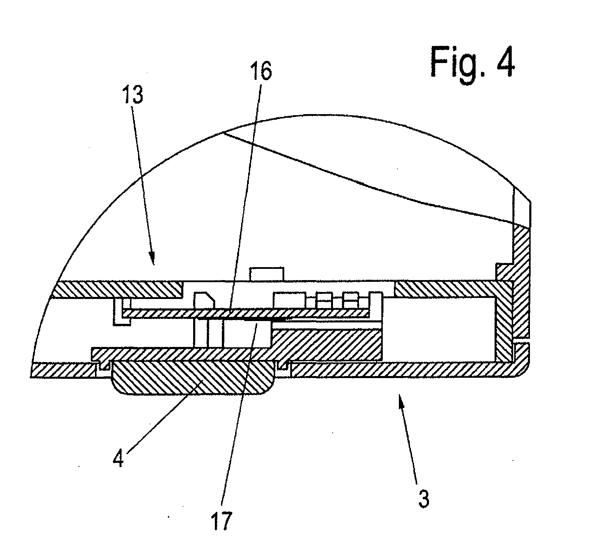

Die Wägevorrichtung 13 besteht aus im Bereich der Standfüße 4 angeordneten Biegebalken 16 mit Dehnungsmessstreifen 17, was aus Figur 4 besonders deutlich hervorgeht. Die Wägevorrichtung 13 ermittelt eine Veränderung des Gesamtgewichtes der Kaffeemaschine 1 beim Einfüllen von Frischwasser in den Frischwasserbehälter 5 und/oder beim Einfüllen von Kaffeemehl 12 in das Filtergefäß 6. Über die Dehnungsmessstreifen 17 der Wägevorrichtung 13 werden elektrische Signale erzeugt und diese dem Dosierrechner 14 zugeleitet. Je nach Ausgestaltung dieses Dosierrechners 14 kann das jeweils ermittelte Gewicht, beispielsweise dass des eingefüllten Frischwassers, umgerechnet werden in eine dadurch erzeugbare Menge an Tassen eines fertigen Brühgetränkes, wobei die Anzeigeeinrichtung 15 dem Benutzer die jeweils ermittelte Anzahl von Tassen optisch anzeigt. Nachdem eine vom Benutzer gewünschte Anzahl von Tassen angezeigt wird, erfolgt keine weitere Zugabe an Frischwasser, so dass sich nunmehr das Gesamtgewicht der Kaffeemaschine 1 zunächst einmal nicht mehr ändert. Der Benutzer kann nun über eine Tariereinrichtung 18 die Wägevorrichtung 13 wieder auf einen Null-Wert zurücksetzen. Danach füllt der Benutzer Kaffeemehl 12 in den Filterbehälter 6 ein. Dadurch ergibt sich wiederum eine Gewichtszugabe, die über die Wägevorrichtung 13 ermittelt und über entsprechende Signale dem Dosierrechner 14 mitgeteilt wird. In einem vorgegebenen Programm des Dosierrechners 14 ist festgelegt, welche an Kaffeemehl 12 zugegeben werden muss, um zusammen mit der vorher eingefüllten Menge an Frischwasser einen Brühkaffee in einer gewünschten Trinkstärke zu erzeugen. Ist diese Gesamtmenge an Kaffeemehl 12 durch die Wägevorrichtung 13 erfasst, wird über die Anzeigeeinrichtung 15 dem Benutzer optisch und/oder akustisch signalisiert, dass die für die gewünschte Menge des zu erzeugenden Brühkaffees erforderliche Menge an Kaffeemehl 12 eingefüllt ist. Der Benutzer kann somit diesen Vorgang beenden und durch Einschalten des Durchlauferhitzers 8 den Brühvorgang einleiten.

Der Dosierrechner 14 kann derart programmiert sein, dass ein Benutzer verschiedene Trinkstärken vorwählen kann. Hierzu ist an der Gehäusefront ein Drehknopf 19 vorgesehen, über den eine gewünschte Trinkstärke vom Benutzer vorwählbar ist. Durch eine Betätigung dieses Drehknopfes 19 ändert sich das Dosierverhältnis zwischen Frischwasser und Kaffeemehl 12, so dass sich zwangsläufig eine unterschiedliche Trinkstärke des erzeugten Brühkaffees ergibt.

Der Dosierrechner 14 kann selbstverständlich auch einer zuerst in den Filterbehälter 6 eingefüllten Menge an Kaffeemehl 12 eine bestimmte Menge an Frischwasser zuordnen, die mit der eingefüllten Menge an Kaffeemehl 12 einen Brühkaffee einer vorher vorgewählten Trinkstärke ergibt.

Auch hier kann der Dosierrechner 14 so ausgelegt sein, dass nach dem Einfüllen einer bestimmten Menge an Kaffeemehl 12 in den Filterbehälter 6 jeweils angezeigt wird, wie viele Tassen von Brühkaffee mit dieser gegebenen Menge an Kaffeemehl 12 erzeugt werden können. Ist der Benutzer mit der Vorauswahl zufrieden, wird wieder die Tariereinrichtung 18 betätigt und die Wägevorrichtung 13 auf Null gestellt. Nun füllt der Benutzer solange Frischwasser in den Frischwasserbehälter 5 ein, bis ihm über die Anzeigeeinrichtung 15 optisch und/oder akustisch das Erreichen der erforderlichen Menge an Frischwasser signalisiert wird.

Die für eine bestimmte Trinkstärke eines zu erzeugenden Brühkaffees erforderliche Dosierung zwischen Frischwasser einerseits und Menge an Kaffeemehl 12 andererseits wird also für einen Benutzer mit der erfindungsgemäßen Kaffeemaschine 1 erheblich vereinfacht und auch im Ergebnis genauer gestaltet, so dass ein Benutzer in der Lage ist, eine von ihm bevorzugte Trinkstärke von Brühkaffee dauerhaft zu erzielen, unabhängig davon, ob eine kleinere oder eine größere Gesamtmenge von Brühkaffee erzeugt wird.

Wie aus Figur 1 sehr deutlich hervorgeht, ist unterhalb des Frischwasserbehälters 5 ein Druckschalter 20 angeordnet. Befindet sich, wie in Figur 1 gezeigt, innerhalb des Frischwasserbehälters 5 Frischwasser, ist der Kontakt des Druckschalters 20 geschlossen. Nur bei geschlossenem Druckschalterkontakt kann der Heizer eingeschaltet werden. Sinkt durch den fortschreitenden Brühprozess der hydrostatische Druck auf den Druckschalter 20, öffnet sich der Kontakt und der Heizer wird abgeschaltet.

Es ist dann nur noch der sogenannte Warmhaltemodus aktiv, d.h., eine unterhalb des Aufnahmebehälters 7 befindliche Heizung sorgt nur noch für eine Warmhaltung des in dem Behälter 7 aufgefangenen Brühkaffees. Es ist möglich, die elektrische Schaltung weiterhin so auszulegen, dass die Einschaltdauer der Warmhalteplatte nach einer vom Benutzer vorprogrammierbaren Zeit abgeschaltet und das gesamte Gerät nur noch im Standby-Betrieb läuft.

Ausgehend von dem angesprochenen Standby-Betrieb kann die Kaffeemaschine 1 nur dann wieder in Betrieb genommen werden, wenn sich im Frischwasserbehälter 5 Frischwasser befindet und somit ein hydrostatischer Druck auf den Druckschalter 20 einwirkt. Es wurde schon erwähnt, dass nur in diesem Falle der Kontakt des Druckschalters 20 geschlossen und der Heizer zur Erhitzung des Frischwassers eingeschaltet werden kann.

Die Kaffeemaschine besitzt die oben beschriebene Uhr- und Timerfunktion. Dadurch ist sie permanent mit Strom versorgt. Damit ist es möglich, mit Hilfe des Druckschalters beim Eingießen von Wasser in den Wassertank ein elektrisches Signal zu erzeugen, mit dem die Wägevorrichtung tariert werden kann.

Hat der Nutzer die Absicht, die Kaffeemaschine 1 zur Zubereitung eines Brühgetränkes vorzubereiten, ist es möglich, die Wägevorrichtung 13 und die Anzeigeeinrichtung 15 mit Strom zu versorgen, ohne dass der Benutzer vorher einen separaten Einschaltvorgang vornehmen muss. Die Einschaltung geschieht automatisch dadurch, dass nach dem Einfüllen von Frischwasser in den Frischwasserbehälter 5 der Druckschalter 20, wie oben beschrieben, automatisch betätigt wird.

### Bezugszeichenliste

- 1: Kaffeemaschine
- 2: Gehäuse
- 3: Gehäusesockel
- 4: Standfuß
- 5: Frischwasserbehälter
- 6: Filterbehälter
- 7: Aufnahmebehälter
- 8: Durchlauferhitzer
- 9: Steigleitung
- 10: Überlaufrohr
- 11: Auslauf
- 12: Kaffeemehl
- 13: Wägevorrichtung
- 14: Dosierrechner
- 15: Anzeigeeinrichtung
- 16: Biegebalken
- 17: Dehnungsmessstreifen
- 18: Tariereinrichtung
- 19: Drehknopf
- 20: Druckschalter

## Patentansprüche

1. Kaffeemaschine (1), insbesondere Haushalts-Kaffeemaschine, mit einem Frischwasserbehälter (5), einem Filterbehälter (6) und einem Gehäuse (2) mit einem Gehäusesockel (3), welcher mehrere Standfüße (4) zur Abstützung der Kaffeemaschine (1) auf einem Tisch, einer Arbeitsplatte oder dergleichen aufweist, wobei die Kaffeemaschine (1) eine Einrichtung zur Erleichterung der Dosierung der für einen Brühkaffee bestimmter Trinkstärke erforderlichen Menge von Frischwasser und Kaffeemehl (12) aufweist, wobei die Einrichtung eine Wägevorrichtung (13), einen Dosierrechner (14) und eine Anzeigeeinrichtung (15) umfasst, **dadurch gekennzeichnet, dass** die Wägevorrichtung (13) mindestens einen in einem Standfuß (4) angeordneten Biegebalken (16) mit einem Dehnungsmessstreifen (17) aufweist.

2. Kaffeemaschine nach Anspruch 1, **dadurch gekennzeichnet, dass** die Wägevorrichtung (13) in jedem Standfuß (4) einen Biegebalken (16) mit einem Dehnungsmessstreifen (17) aufweist.

3. Kaffeemaschine nach Anspruch 1 oder 2, **dadurch gekennzeichnet, dass** der Dosierrechner (14) mit einem Umrechnungsprogramm ausgestattet ist, mittels dessen nach dem Einfüllen und Abwiegen einer Menge von Frischwasser oder Kaffeemehl (12) die für die Erzeugung eines Brühkaffees bestimmter Trinkstärke erforderliche Menge von Kaffeemehl (12) oder Frischwasser errechnet und dass das Erreichen dieser errechneten Menge optisch und/oder akustisch über die Anzeigeeinrichtung (15) angezeigt wird.

4. Kaffeemaschine nach einem der vorhergehenden Ansprüche, **dadurch gekennzeichnet, dass** die Wägevorrichtung (13) nach dem Einfüllen einer Menge von Frischwasser oder Kaffeemehl (12) über eine Tariereinrichtung (18) tarierbar ist, so dass die zuvor errechnete Menge von Kaffeemehl (12) oder Frischwasser ausgehend von einer Null-Stellung der Wägevorrichtung (13) erfassbar ist.

5. Kaffeemaschine nach einem der vorhergehenden Ansprüche, **dadurch gekennzeichnet, dass** im elektrischen Kreislauf der Kaffeemaschine (1), unterhalb des Frischwasserbehälters (5) ein auf hydrostatischen Druck reagierender Druckschalter (20) angeordnet ist.

## Claims

1. Coffee machine (1), particularly household coffee machine, with a fresh water container (5), a filter container (5) and a housing (2) with a housing base (3), which has a plurality of feet (4) for supporting the coffee machine (1) on a table, a worktop or the like, wherein the coffee machine (1) comprises a device for facilitating metering of the quantity of the fresh water and coffee grinds (12) required for brewed coffee of specific strength, wherein the device comprises a weighing device (13), a metering calculator (14) and an indicating device (15), **characterised in that** the weighing device (13) comprises at least one flexural beam (16), which is arranged in a foot (4), with a strain gauge (17).

2. Coffee machine according to claim 1, **characterised in that** the weighing device (13) comprises a flexural beam (16) with a strain gauge (17) in each foot (4).

3. Coffee machine according to claim 1 or 2, **characterised in that** the metering calculator (14) is equipped with a recalculation program, by means of which after the filling and weighing of an amount of fresh water or coffee grinds (12) the quantity, which is required for producing brewed coffee of specific strength, of coffee grinds (12) or fresh water is calculated and that reaching of this calculated quantity is optically and/or acoustically indicated by way of the indicating device (15).

4. Coffee machine according to any one of the preceding claims, **characterised in that** the weighing device (13) after filling of a quantity of fresh water or coffee grinds (12) can be tared by way of a taring device (18) so that the quantity, which is calculated beforehand, of coffee grinds (12) or fresh water is determinable starting from a zero setting of the weighing device (13).

5. Coffee machine according to any one of the preceding claims, **characterised in that** a pressure switch (20) reacting to hydrostatic pressure is arranged in the electrical circuit of the coffee machine (1) below the fresh water container (5).

## Revendications

1. Machine à café (1) en particulier machine à café domestique comprenant un réservoir d'eau fraiche (5), un réservoir de filtre (6) et un boitier (2) comportant une embase (3) équipée de plusieurs pieds d'appui (4) pour permettre à la machine à café (1) de s'appuyer sur une table, une plaque de travail ou similaire, la machine à café (1) étant équipée d'un dispositif permettant de faciliter le dosage de la quantité d'eau fraiche et de café moulu (12) nécessaire pour l'obtention d'un café infusé ayant une puissance déterminée, ce dispositif comportant un dispositif de pesage (13), un calculateur de dosage (14) et un dispositif d'affichage (15),
**caractérisée en ce que**
le dispositif de pesage (13) comporte au moins une baguette flexible (16) équipée d'une bande de mesure de contrainte (17) montée dans un pied d'appui (4).

2. Machine à café conforme à la revendication 1,
**caractérisée en ce que**
le dispositif de pesage (13) comporte une baguette flexible (16) équipée d'une bande de mesure de contrainte (17) dans chacun des pieds d'appui (4).

3. Machine à café conforme à la revendication 1 ou 2,
**caractérisée en ce que**
le calculateur de dosage (14) est équipé d'un programme de calcul au moyen duquel après le remplissage et le pesage d'une quantité d'eau fraiche ou de café moulu (12) la quantité de café moulu (12) ou d'eau fraiche nécessaire pour l'obtention d'un café infusé ayant une puissance déterminée, est calculée, et l'obtention de cette quantité calculée est affichée par des moyens optiques et/ou acoustiques sur le dispositif d'affichage (15).

4. Machine à café conforme à l'une des revendications précédentes,
**caractérisée en ce que**
le dispositif de pesage (13) peut être taré après remplissage d'une quantité d'eau fraiche ou de café moulu (12) par l'intermédiaire d'un dispositif de tarage (18) de sorte que la quantité préalablement calculée de café moulu (12) ou d'eau fraiche puisse être déterminée à partir d'une position zéro du dispositif de pesage (13).

5. Machine à café conforme à l'une des revendications précédentes,
**caractérisée en ce que**
dans le circuit électrique de la machine à café (1), au-dessous du réservoir d'eau fraiche (5) est monté un interrupteur manométrique (20) sensible à la pression hydrostatique.
